Europäisches Patentamt

**European Patent Office**

**Office européen des brevets**

(19)

(11) Publication number: **0 043 871**

**A1**

(12) # EUROPEAN PATENT APPLICATION

(21) Application number: **80200661.9**

(22) Date of filing: **04.07.80**

(51) Int. Cl.³: **C 01 D 1/40**
**C 01 D 1/28**

(43) Date of publication of application:
**20.01.82 Bulletin 82/3**

(84) Designated Contracting States:
**DE FR GB NL**

(71) Applicant: **THE DOW CHEMICAL COMPANY**
**2030 Abbott Road Post Office Box 1967**
**Midland, Michigan 48640(US)**

(72) Inventor: **Porta, Augusto**
**Avenue De Miremont 31 Bis**
**CH-1206 Geneva(CH)**

(72) Inventor: **Mosetti, Jacques**
**Chemin Des Verjus 8/1**
**CH-1212 Grand Lancy(CH)**

(74) Representative: **Urbanus, Henricus Maria, Ir. et al,**
**c/o Vereenigde Octrooibureaux Nieuwe Parklaan 107**
**NL-2587 BP 's-Gravenhage(NL)**

(54) Method for removing chlorate from caustic solutions with electrolytically deposited iron and process for recovering said iron from said purified solutions.

(57) A process for removing chlorate from a caustic solution in an electrolytic cell by the reduction of the chlorate with metallic iron. The process is particularly distinguished by the steps of contacting the caustic solution with iron (8a) to reduce the chlorate to chloride, contacting the caustic solution containing dissolved iron therein with a conductive substrate (8b) to electrolytically precipitate the iron on the substrate, thus providing a caustic solution which is substantially free from iron and chlorate ions, removing the purified portion of the caustic solution from the cell, using the iron coated substrate (8b) for treating an untreated portion of the caustic solution to substantially reduce the chlorate to chloride, and reusing the iron reduced substrate for recovering dissolved iron from the caustic solution. The process of this invention substantially decreases the chlorate content of caustic solutions and also recovers dissolved iron in the solution on a substrate for reuse and further reduction of chlorate of an untreated portion of the caustic solution.

Croydon Printing Company Ltd.

METHOD FOR REMOVING CHLORATE FROM CAUSTIC
SOLUTIONS WITH ELECTROLYTICALLY DEPOSITED IRON
AND PROCESS FOR RECOVERING SAID IRON FROM SAID
PURIFIED SOLUTIONS.

## BACKGROUND OF THE INVENTION

### A. FIELD OF THE INVENTION

The present invention relates to the use electrolytically reduced iron for removing chlorate from caustic solutions in a diaphragm electrolytic cell. More particularly, it relates to a process for decreasing the chlorate content of caustic solutions containing from 300 to 1000 ppm $ClO_3^-$ to acceptable levels of a few parts per million (ppm) by using electrodeposited iron as the reducing agent.

The invention also relates to the recovery of dissolved iron which has been used for the cathodic reduction of chlorate and for recovery of such iron in its elemental form and to re-use such recovered iron for further reducing the chlorate of a still untreated portion of the caustic solution. The process is very economical since overall consumption of iron is greatly minimized.

### B. DESCRIPTION OF THE PRIOR ART

The removal of unwanted excess chlorate in sodium hydroxide solutions obtained from the electrolysis of brine in a diaphragm electrolytic cell is carried out
in prior art methods by using reducing agents, a number
of which have been described, including iron.  Thus, U.S.
Patent No. 2,404,453 discloses the reduction of chlorate
in sodium hydroxide solutions containing about 50 percent
NaOH using iron in comminuted form (chips or turnings),
said iron particles being coupled with a more noble metal
such as copper.  Also, U.S. Patent No. 2,403,789 discloses
the purification of a 30-60 percent NaOH solution from
excess chlorate by means of iron powder or filings.  In
such processes, the iron dissolves in the caustic forming
$Fe^{+2}$ and $Fe^{3+}$ ions and simultaneously reduces the chlorate
to chloride.

The dissolved iron which is then present as an
impurity in the caustic solution as the result of the
removal of chlorate should thereafter be eliminated by
means involving, for example, oxidation, precipitation or
electrolytic reduction.  The cathodic removal of iron and
other metal ions has also been disclosed in U.S. Patent
No. 3,244,605 and French Patent No. 1,505,466.  According
to these prior patents, the caustic solution containing
the iron to be removed (and possibly other metal impurities)
is subjected to electrolysis whereby the iron deposits as
a metallic coating on the cathode of the electrolytic
cell.  However, it has not been reported that such electrolytically deposited iron can be re-used by again reducing
the chlorate content of a yet untreated caustic solution.

SUMMARY OF THE INVENTION
The present invention is a process for removing
chlorate from caustic solutions by the reduction of said
chlorate with electrodeposited metallic iron.

0043871

The present invention also resides in a process for removing chlorate from a caustic solution in an electrolytic cell by dissolving metallic iron in the solution to reduce at least a portion of said chlorate and thereafter removing said iron from the solution, comprising the steps of

(A) contacting said caustic solution to be purified with an iron coated substrate for reducing the $ClO_3^-$ in the caustic solution to chloride and thereby enriching the solution with dissolved iron,

(B) contacting the iron enriched solution with at least one electrically polarized substrate for electrolytically precipitating the iron on said substrate in a form suitable for subsequently reducing chlorate as in step (a), thus providing a purified caustic solution which is substantially free from iron and $ClO_3^-$ ions,

(C) removing said purified portion of the solution from the cell and

(D) using said electrolytically iron coated substrate to treat a yet untreated portion of the caustic solution as in step (a).

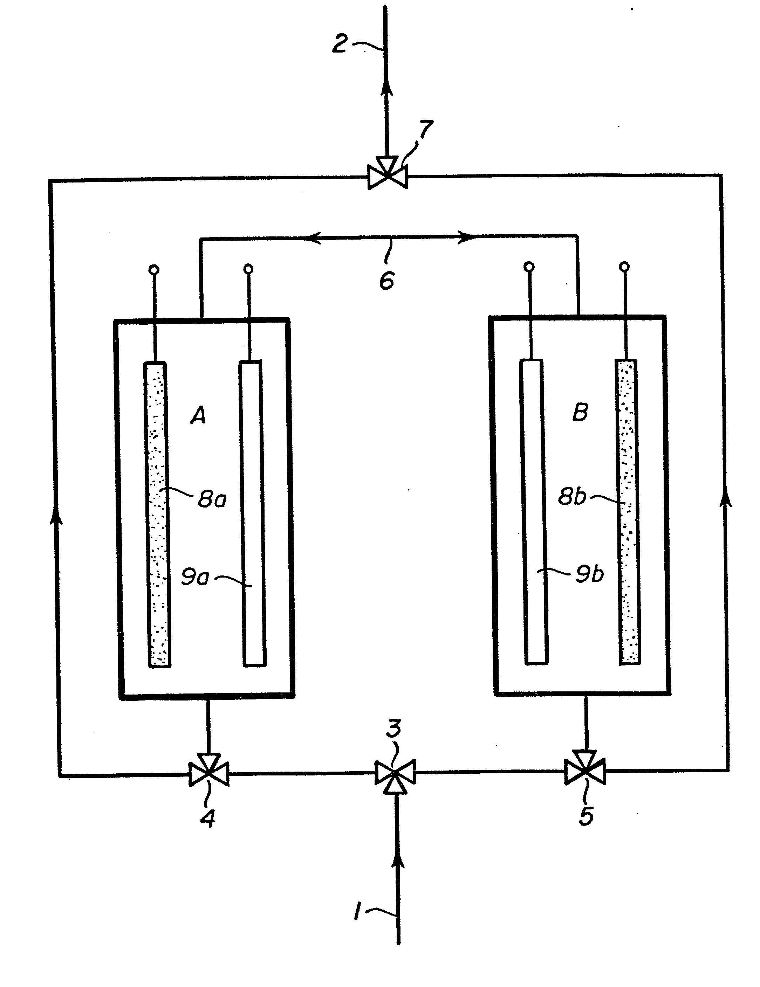

THE DRAWING

In the drawing is depicted a schematic representation of an embodiment of the invention for continuously purifying in a closed cycle a caustic solution of chlorate by using iron.

DETAILED DESCRIPTION OF THE PREFERRED EMBODIMENTS

It will be understood that the various process conditions such as temperature, contacting time and ratio of available iron to caustic can be varied within normal limits of operation and without detrimentally affecting the benefits obtained by the process of the present invention. However, it is preferred that the process of the present invention as carried out in step (A) is at a temperature above room temperature, preferably at about 100°C, with or without agitation. The contacting time depends on the temperature and can be conducted over a period of time of from about 1 to about 20 hours. The time also depends on the ratio of available iron to the caustic to be treated. Such ratio is also not critical provided, naturally, that the available iron be at least stoichiometrically sufficient for reducing the chlorate to be removed. In practice, it has been found that when nearly 100 percent of the original chlorate has disappeared, that is when there remains from about 5 to about 15 ppm of $ClO_3^-$, the amount of dissolved iron is from about 400 to about 600 ppm. Therefore, the amount of iron to be used is somewhat dependent on the total amount of chlorate originally present in the caustic solution to be purified. However, in practice it is generally advantageous to use an excess of metallic iron since its physical bulk relative to the caustic solution is not a problem and, actually, no more than the quantity required for effecting the required reduction needs to be dissolved. Therefore, the amount of iron to be used, and its physical arrangement within the caustic solution will be easily determined by the skilled practitioner, this being also dependent on whether the practical implementation relates to a batch or a continuous process.

The electrodeposition of iron under strongly alkaline conditions prevailing in a cell containing a concentrated caustic solution will provide that form of electrodeposited metallic iron which is best suitable for reducing chlorate in step (B) of the inventive process.

Thus, not depending on the nature of the conductive substrate used as the cathode, the iron will deposit in a porous, spongy form on the substrate and is particularly suitable for being easily re-dissolved because its agglomerated porous structure provides a very large surface area of metal to be contacted by the caustic solution. In practice, electrodes of a porous graphite or metal mesh, e.g. iron or nickel are suitable. Current densities of from about 0.1 to about 10 $A/dm^2$ (amperes per decimeter$^2$) and temperatures of from about room temperature to about 80°C are suitable for recovering the iron from the caustic solution in step (B) in a form suitable for re-use in step (A). Preferably, the solution is agitated or circulated during such iron recovery. The counter electrode (anode) should be made of a material which is resistant to the environment in an electrolytic cell. Thus, the anode must not dissolve in the caustic solution due to oxidation and should therefore be made of noble metals or alloys of noble metals. Such anodes may also be constructed of a substrate or core of film forming metals, preferably tantalum or titanium, which is provided with a coating of, for example, a noble metal, a noble metal alloy, a noble metal oxide, mixtures of noble metal oxides, or mixed crystals of noble metal oxides. In practice, a noble metal or noble metal oxide coated expanded titanium substrate is suitable. It should be remarked that, even in cases where electrolytic recovery conditions of the iron are such that they provide homogeneous, inherently non-porous deposits on the cathode, the porous nature of the cathodically polarized substrates will ensure that a sufficient amount of internal discontinuities exist within the coated layer to still provide an iron coating of a highly porous or non-homogeneous form.

In one embodiment for physically implementing the invention, an aqueous solution to be treated is introduced into a conventional glass or polytetrafluoroethylene (PTFE) container and contacted at a moderately elevated temperature of from about 80° to about 100°C with a plate of nickel mesh covered with an electrolytically plated iron coating in pulverulent or porous form. The solution is periodically analyzed by conventional means for chlorate and iron content. When the initial chlorate content in the solution of from about 400 to about 500 ppm has been decreased by about 90 to about 95 percent, the temperature is lowered to about 50°C and an anode plate is immersed into the solution and electrolysis is carried out until substantially all of the iron has been plated out and redeposited on the plate of nickel mesh. When the iron content in the solution has been substantially reduced, the purified solution is poured out and replaced by a new portion of untreated caustic solution. The temperature is raised again and the process is repeated thus avoiding undue losses of iron. It has been found that during the iron recovery step, other heavy metals which may be present in the solution, such as e.g. Ni, Co, Mn, Pb, are also plated out which constitutes a further advantage of the invention. During the dissolution stage, some of these metals are electrolytically inert and, as a consequence, the substrate will become progressively enriched in such plated-out metals (other then iron) in the course of repetition of the successive dissolution and plating cycles. Accordingly, there will come a time when the substrate is over-enriched and the plate will have to be taken out and replaced. However, metals other than iron can be subsequently recovered from the plate.

With particular reference to the drawing, the system comprises an inlet conduit 1 for the unpurified caustic solution and a general outlet conduit 2 for the purified caustic solution. The impure caustic solution can be directed, as desired, from conduit 1 through a two-way valve 3 to a first cell A or to a second cell B, the inlet conduits to these cells being controlled by two-way valves 4 and 5, respectively. Accordingly, the solution flows through conduit 6 either from cell A to cell B, or vice-versa. Whichever way, the solution, after flowing through cells A and B will leave through one of the valves 4 or 5, the position of the latter having been selected for the desired purpose, and will finally flow out of the general outlet conduit 2 after having passed through a two-way control valve 7. It is readily seen that, in order to provide the desired flow direction, the various valves must be linked together by conventional control means (not represented here for the sake of simplicity). Thus, the valves must be controlled in order to either direct the caustic solution from the inlet conduit 1 through cell A, conduit 6 through cell B, and finally to the outlet conduit 2 or alternatively, from the inlet conduit 1 through cell B, conduit 6 and through cell A to the outlet conduit 2.

Each of the cells contains one plate covered with electrolytically reduced iron, 8a and 8b, respectively, and a plate 9a and 9b, respectively, made of an electrochemically inert material, such as a titanium substrate coated with a noble metal or a noble metal oxide, as previously disclosed. These plates are suitably connectable to an electric current source such as a DC generator (not represented here).

Under normal operating conditions, the present system functions as follows: In a first mode, the valves will be adjusted so that the path of the caustic solution is directed from cell A through cell B; the plates of cell A will stay unpolarized whereas plate 8b of cell B will be at a negative potential relative to plate 9b by means such as the above-mentioned D.C. generator. Thus, the caustic solution of cell A will become purified from excess chlorate by contacting the iron coating on said plate. At the same time, however, the caustic solution is loaded or charged with iron. The iron containing caustic solution will then flow through cell B where the iron is deposited electrolytically on plate 8b. After some time, the iron supply on plate 8a will be reduced or substantially depleted and plate 8b will be plated. In a second mode of operation , the valves will be re-set to provide a solution flow from cell B through cell A, the b plates will be disconnected and the a plates will be polarized as previously described in the case of the first mode for the b plates. The whole process is then allowed to continue, the only operation being to periodically switch back from the second to the first mode and vice-versa.

Of course, the process can be operated semi-continuously, with the valves being closed and the operation being carried out on a finite or batch portion of the caustic solution. The valves are then opened to allow the content of one cell to flow to the other cell while re-filling the one cell with an untreated caustic solution and emptying the purified solution from the other cell. Such sequence can be repeated until the iron coating on the reducing plate of the one cell is reduced or substantially exhausted. The series of sequences will be continued after reversing the order of the cells as described above for the continuous operative embodiment.

In the present invention, polymeric materials may be used in the construction of the conduits, the valves and the cells. Such materials can be any of the well known synthetic resins which are inert to concentrated caustic solutions and which resist moderately elevated temperatures. As such, polyolefines, melamine--formaldehyde or polytetrafluoroethylene (PTFE), for example, can be employed. Corrosion resistant metals such as monel, stainless steel or bronze can also be used.

The invention is illustrated in greater detail by the following examples.

## Example 1

### First phase

A 20 $cm^2$ iron coated electrode plate was originally prepared by manually depositing a 4 mm layer of iron powder (50-80 μm particles) on a 0.5 mm thick iron plate. The thus coated plate was then sintered for 1 hour at a temperature of 900°C in a nitrogen atmosphere containing about 5 percent $H_2$. The plate was then introduced into a 400 ml PTFE cylindrical container provided with agitation means and a reflux condenser. 250 ml of a 35 percent aqueous sodium hydroxide solution containing 445 ppm chlorate was introduced into the container and heated to 110°C. The reaction was allowed to proceed under moderate agitation. Samples of the solution were removed at periodic intervals for analysis. Table I, below, shows the results of said analysis performed by known methods described hereinafter. The results indicate that most of the $ClO_3^-$ was removed after about 6 hours reaction time.

### TABLE I

| Time, hrs | $ClO_3^-$, ppm | Fe, ppm | $ClO_3^-$, removal, % |
|-----------|----------------|---------|------------------------|
| 0 | 445 | 0 | 0 |
| ½ | 445 | 3.5 | 0. |
| 1 | 410 | 32 | 8 |
| 1½ | 374 | 57 | 16 |
| 2¼ | 240 | 139 | 46 |
| 3 | 160 | 238 | 64 |
| 4 | 72 | 480 | 85 |
| 6 | 18 | 530 | 96 |

#### Second phase

A 20 $cm^2$ platinized anode was introduced into the container and adjusted parallel to the iron coated electrode plate at a distance of about 5 cm. The old solution was removed and the container was provided with a fresh solution which was then electrolyzed at a temperature of 80°C and at a current of 4 $A/cm^2$ for a day after which the iron level was found to be 12 ppm (about 98 percent removal).

The container was refilled with a chlorate enriched caustic solution and the process was repeated with essentially the same results. The cycle including phase one followed by phase two was repeated several times with no significant change in behavior of the reducing and recovery conditions.

The analytical methods used were the following:

Chlorates

An amount of solution corresponding to approximately 60 mg of $NaClO_3$ was measured exactly and introduced into a 10 ml volumetric flask, then 3 ml of concentrated $H_2SO_4$ (98%) were carefully introduced from a 3 ml safety pipette by making the tip of the pipette touch the inside wall of the upper stem of the flask and releasing the acid slowly. The solution was cooled to room temperature, and 0.020 grams of $FeSO_4(NH_4)_2SO_4 \cdot 6H_2O$ (MOHR's salt), were added, the solution was levelled to the mark with distilled water and mixed thoroughly. A reagent blank was prepared in the same manner. Then, the absorbances (vs $H_2O$) of the reagent blank and the sample solution were measured at 301 mμ in a 1 cm silica cell. The reagent blank was stable for at lest one hour and its absorption only accounted to about 0.060 of an absorbance unit. The chlorate content was calculated from:

$$E^{301}_{Fe^{+3}, 10, 9NH_2SO_4} = 2.90 \times 10^3 \text{ liter mole}^{-1}\text{cm}^{-1}$$

Iron

10 ml of the sample, 10 ml of concentrated hydrochloric acid, 1 ml of hydrogen peroxide and 10 ml of ammonium thiocyanate were introduced into a 100 ml volumetric flask. After dilution to volume, a spectrophotometric measurement was performed at 470 mμ. As this method is very sensitive (works in the range of 1 to 10 mg/l), it was necessary to choose an adequate volume of sample in the measurable concentration range.

Example 2

A 25 cm$^2$ nickel grid plate of 40 mesh (pore openings of about ∿500 μm) was immersed for several

minutes in 2N HCl and then rinsed in distilled water. It was then used to de-ironize (at 50°C) 600 ml of an aqueous 50 percent sodium hydroxide solution containing 480 ppm of dissolved iron at a current density of 4 A/dm$^2$. The electrolysis was carried out for 2-1/2 days, after which the iron removal was 99 percent complete.

The iron plated nickel grid was then used to reduce the chlorate content of 200 ml of a 50 percent untreated aqueous caustic solution containing 550 ppm of $ClO_3^-$ for a period of 5 hours at a temperature of 100°C exactly as described in phase 1 of Example 1. After that time period, the chlorate was 99 percent removed and the iron content was 650 ppm. The iron was then removed as described in phase 2 of Example 1 and the whole cycle was repeated several times with no significant change in the behavior of the plates and the reagents.

Example 3

A sintered iron plate similar to that used in Example 1 was used as described in said Example for treating an aqueous chlorated (550 ppm) solution of 50 percent sodium hydroxide. Every twelve hours, the cell was emptied, the de-chlorated solution was put aside and a fresh portion of caustic solution was used for a new 12 hour test period without changing the iron plate. After a total of 5 liters of the caustic solution had been treated, the iron was substantially consumed and the plate became inoperative.

The iron contaminated de-chlorated solution was then poured into a 10 liter PTFE tank and subjected to electrolysis at a temperature of 50°C using a platinized titanium anode and using the aforementioned iron-stripped plate as the cathode. During electrolysis, the solution was maintained under moderate agitation. After about 80 percent of the iron was plated out, the iron coated cathode was removed and re-used to de-chlorate untreated portions of a caustic solution with subsequent removal of iron as described in Example 1. This plate provided the same service as the plate of Example 1.

Example 4

A stainless steel tank was filled with 2.5 liter of an aqueous 45 percent NaOH solution containing 375 ppm of chlorate and reduction was carried out at 100°C under slight agitation with a 125 $cm^2$ sintered iron plate. The results are shown in Table II below.

TABLE II

| Time, hrs | $ClO_3^-$, % removal | Fe, ppm |
|---|---|---|
| 0 | 0 | 0 |
| 2 | 16 | 74 |
| 3 | 33 | 172 |
| 4 | 49 | 298 |
| 5 | 62 | 314 |
| 15 | 98 | 450 |

The solution was then put into a 5 liter cylindrical cell made of PTFE and electrolyzed under agitation with a 58.6 $cm^2$ vitreous carbon cathode and a 50 $cm^2$ platinized expanded titanium anode. The current density was about 2 $A/dm^2$ and the temperature 110°C. The results are shown in Table III.

TABLE III

| Time, hrs | Fe, ppm | Iron recovered, % |
|-----------|---------|-------------------|
| 0         | 450     | 0                 |
| 1-1/4     | 154     | 66                |
| 2-3/4     | 23      | 95                |
| 4-2/3     | 18      | 96                |
| 6         | 5       | 99                |

The process of iron recovery was repeated four times using fresh iron containing solutions but still using the same plate as the cathode. Thereafter such iron coated plate was used in a series of chlorate purification and iron removal cycles as described in the previous Examples with equally good results.

Example 5

The set up of Example 1 was used but with the difference that during phase 1 ($ClO_3^-$ removal) an iron sheet electrode was immersed in the cell, and a DC generator was connected to that electrode (cathode) and to the sintered iron plate (anode).

Reduction of chlorate was then carried out under the same conditions as for Example 1, but with the addition of a small current between the sintered iron anode ($0.1$ A/dm$^2$) and the other electrode in order to speed up iron dissolution. The results are shown in Table IV and indicate that the removal of chlorate is somewhat accelerated compared to operating without an electric current.

## TABLE IV

| Time, hrs | $ClO_3^-$, ppm | $ClO_3^-$, % removal | Fe, ppm |
|-----------|----------------|----------------------|---------|
| 0 | 400 | 11 | 86 |
| ½ | 325 | 27 | 161 |
| 1 | 277 | 38 | 234 |
| 1½ | 210 | 53 | 189 |
| 2 | 165 | 63 | 167 |
| 2½ | 108 | 76 | 234 |
| 4 | not measurable | ∿100 | 500 |

Thereafter the sintered iron electrode was used to perform iron recovery as described in Example 1. The above two-phase cycle could be repeated several times with no significant changes to the results obtained.

CLAIMS

1.   In a process for removing chlorate from
caustic solutions by the reduction of said chlorate
with metallic iron, the improvement comprising the
step of using electrodeposited iron as the reducing
agent.

2.   In the process of Claim 1, wherein said
iron is electrodeposited on a substrate from a substantially chlorate free and iron containing caustic
solution to form a coating on at least a portion of
said substrate, said electrocoated substrate being
porous.

3.   In the process of Claim 1, wherein the
caustic solution is obtained from brine by electrolysis
in an electrolytic diaphragm cell.

4.   A process for removing chlorate from a
caustic solution in an electrolytic cell by dissolving
metallic iron in the solution to reduce at least a
portion of said chlorate and therafter removing said
iron from the solution, comprising the steps of

(a)  contacting said caustic solution to be purified with an iron coated metal substrate for reducing the $ClO_3^-$ in the caustic solution to chloride and thereby enriching the solution with dissolved iron,

(b)  contacting the iron enriched solution with at least one electrically polarized substrate for electrolytically precipitating the iron on said substrate in a form suitable for subsequently reducing chlorate as in step (a), thus providing a caustic solution which is substantially free from iron and $ClO_3^-$ ions,

(c)  removing said purified portion of the solution from the cell and

(d)  using said electrically iron coated substrate to treat a yet untreated portion of the caustic solution as in step (a).

5.  The process of Claim 4, wherein after reduction and substantial consumption of said iron electrically deposited on said substrate, the substrate is used again for recovering dissolved iron as in step (b).

6.  The process of Claim 4 comprising the step of introducing a first portion of a caustic solution to be purified in a first electrolytic cell containing a first metal substrate at least partially coated with iron and a second metal substrate inert to the caustic solution, dissolving at least a portion of the iron coating from the substrate to reduce at least a portion of the chlorate impurity in the caustic solution, removing the iron enriched solution from the first cell and introducing it into a second electrolytic cell provided with third and fourth conductive substrates, the fourth substrate being inert with respect to the caustic solution in the cell, establishing a voltage between the third and fourth substrates for negatively polarizing the third substrate and for causing the dissolved iron in the caustic solution to electrolytically deposit thereon.

7. The process of Claim 6, including the step of removing the $ClO_3^-$ and iron depleted solution and repeating the cycle with yet untreated portions of the solution until substantially all iron of the first substrate has been transferred to the third substrate.

8. The process of Claim 6, including the step of reversing the sequential order of the cells such that $ClO_3^-$ is removed in the second cell by contact with the third substrate and so on, this change occurring when the iron coating of the first substrate is reduced or depleted and with the iron in the solution being plated out on the third substrate.

9. The process of Claim 6, wherein step (a) is carried out at a temperature of from about 80° to about 110°C and step (b) at a temperature of from about 50° to about 80°C at a current density of from about 0.1 to about 10 $A/dm^2$.

10. The process of Claim 6, wherein the iron dissolution in step (a) is at least partially anodically dissolved.

European Patent Office

**EUROPEAN SEARCH REPORT**

| DOCUMENTS CONSIDERED TO BE RELEVANT | | | CLASSIFICATION OF THE APPLICATION (Int. Cl.³) |
|---|---|---|---|
| Category | Citation of document with indication, where appropriate, of relevant passages | Relevant to claim | |
| X | FR - A - 799 632 (I.G. FARBEN-INDUSTRIE) <br> * Page 1, line 14 - page 2, line 7 * <br><br> -- | 1,2,4, 5 | C 01 D 1/40 <br> 1/28 |
| A | US - A - 2 403 789 (CUMMINS) | | |
| A | FR - A - 1 505 466 (PPG) <br><br> ---- | | |

TECHNICAL FIELDS SEARCHED (Int. Cl.³)

C 01 D 1/40
1/28

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 09-02-1981 | V. BELLINGEN |

EPO Form 1503.1  06.78